# EUROPÄISCHE PATENTSCHRIFT

(11) **EP 0 785 962 B1**
(45) Veröffentlichungstag und Bekanntmachung des Hinweises auf die Patenterteilung: **28.07.1999**
(21) Anmeldenummer: 95935424.2
(22) Anmeldetag: 02.10.1995
(51) Int. Cl.: C08G 75/02

(54) **VERFAHREN ZUR RECYCLIERUNG VON POLYARYLENSULFIDEN**
POLYARYLENE SULPHIDE RECYCLING PROCESS
PROCEDE DE RECYCLAGE DE SULFURES DE POLYARYLENE

(30) Priorität: 13.10.1994 DE 4436636; 28.10.1994 DE 4438447; 13.12.1994 DE 4444247
(43) Veröffentlichungstag der Anmeldung: 30.07.1997
(73) Patentinhaber: Ticona GmbH, 65451 Kelsterbach (DE)
(72) Erfinder: BRÜCK, Martin, D-61276 Weilrod (DE); SCHLEICHER, Andreas, D-65614 Beselich (DE)
(86) Internationale Anmeldenummer: EP9503900
(87) Internationale Veröffentlichungsnummer: WO9611968

(56) Entgegenhaltungen:
- EP-A- 0 202 537
- EP-A- 0 594 186
- US-A- 5 039 788
- PATENT ABSTRACTS OF JAPAN vol. 010 no. 107 (C-341) ,22.April 1986 & JP,A,60 235838 (KUREHA KAGAKU KOGYO KK) 22.November 1985,

## Beschreibung

Die Erfindung betrifft ein Verfahren zur Recyclierung von Polyarylensulfiden (PAS), bei dem Polyarylensulfid mit gleichen, gegebenenfalls verbesserten Produkteigenschaften im Vergleich zum konventionell hergestellten Ausgangsmaterial wiedergewonnen wird.

Eine "stoffliche Verwertung" von Polyarylensulfidabfällen zur Wiederverwendung beschränkt sich bisher auf ein Aufschmelzen von sortenreinen, unverschmutzten Produktionsabfällen oder Fehlchargen. Dabei können nur Polyarylensulfidabfälle gleicher oder ähnlicher Zusammensetzung, insbesondere gleicher Zusätze und Füllstoffgehalte verwendet werden, wenn nicht eine Veränderung der Eigenschaften des Polymer-Materials in Kauf genommen wird. Wiederholte thermische Belastung bei der Wiederverwendung führen in der Regel zu Qualitätsverlusten bei dem Polymermaterial.

In DE-C-34 33 978 wird berichtet, daß durch wiederholte thermische Belastungen von Polyarylensulfid eine Unter- bzw. Übervernetzung eintritt, die bei linearen Polyarylensulfid-Ausgangsmaterialien zu einer Verschlechterung der fließ- und der zähelastischen Eigenschaften bedeutet.

Allgemein werden viele Füllstoffe in Kunststoffen, wie Glasfasern oder Mineralstoffe, bei einer erneuten Verarbeitung beschädigt. Bei faserverstärkten Kunststoffen wird beispielsweise durch eine wiederholte Extrudierung, z.B. bei einem Spritzgußprozeß, die durchschnittliche Faserlänge von Verstärkungsfasern stark verringert, so daß sich die mechanischen Eigenschaften eines Kunststoffes sich mit jedem Verarbeitungsschritt verschlechtern (sogenanntes "Down grading").

EP 0 461 655 A1 beschreibt die Gewinnung von Polyarylensulfidteilchen mit einem niedrigen Oligomer- und Aschegehalt aus einem flüssigen Reaktionsgemisch, das Polyarylensulfid, polares organisches Lösemittel und Wasser enthält, durch Abkühlen der Mischung. Das Verfahren ist Teil eines Herstellungsprozesses von Polyarylensulfid.

Die Aufgabe der Erfindung ist eine Wiedergewinnung von Polyarylensulfid aus polyarylensulfidhaltigen Materialien, insbesondere Altmaterialien, wobei der Gehalt und die Art von Füllstoffen oder Additiven, Verunreinigungen oder Verschmutzung und Alter des Materials keine Rolle spielen sollen und das wiedergewonnene Polyarylensulfid sich auch für eine Recompoundierung eignen soll.

Die Erfindung betrifft ein Verfahren zur Gewinnung von Polyarylensulfid aus Polyarylensulfid-haltigem Material, bei dem das Polyarylensulfid-haltige Material mit einem Lösemittel bei 150-360°C behandelt, das Polyarylensulfid dabei gelöst und anschließend durch Mischen der Polyarylen Sulfid-Lösung mit einem flüssigen Medium ausgefällt wird wobei das flüssige Medium ein Lösemittel mit einer Aldehyd-oder Ketogruppe, ein aromatisches Lösemittel oder eine Lösungsmittelmischung, die ein Lösemittel mit einer Aldehyd-oder Ketogruppe oder ein aromatischer Lösemittel enthält, ist.

Ein weiterer Gegenstand der Erfindung bezieht sich auf die Reinigung von Polyarylensulfid-haltigem Material, wobei das Polyarylensulfid-haltige Material gelöst, ungelöste Polyarylensulfid-Oxidationsprodukte, Polyarylensulfid-Alterungsprodukte, Abbauprodukte, Aufbauprodukte, Additive oder Füllstoffe abgetrennt werden und das Polyarylensulfid aus der resultierenden Lösung durch Abkühlen, spontanes Verdampfen des Lösemittels oder durch Mischen mit einem flüssigen Medium ausgefällt wird.

Die Ausfällung von Polyarylensulfid erfolgt durch Abkühlen der Polyarylensulfid-Lösung, spontanes Verdampfen des Lösemittels (flashen) oder bevorzugt durch Mischen mit einem flüssigen Medium. Unter einem flüssigen Medium ist Wasser und/oder ein anorganisches oder organisches Lösemittel zu verstehen, in dem Polyarylensulfid sich wenig löst oder unlöslich ist. Vorteilhaft ist, wenn das flüssige Medium Oligmere und/oder andere Verunreinigungen löst. Hierzu eignen sich Lösemittel mit einer Aldehyd- oder Keto-Gruppe wie Aceton oder aromatische Lösemittel wie Toluol. Ein flüssiges Medium, das wassermischbar ist, beispielsweise Aceton, kann Wasser enthalten. Es ist vorteilhaft, wenn das flüssige Medium mit dem Lösemittel zur Auflösung von PAS mischbar ist. Das flüssige Medium kann auch aus einer Mischung von Lösemitteln bestehen. Beispielsweise kann eine Mischung das zum Auflösen von PAS verwendete Lösemittel enthalten.

Die Verwendung von Aceton oder acetonhaltigen Lösemittelgemischen als flüssiges Medium ist besonders vorteilhaft bei einer Ausfällung von PAS, da Aceton ein gutes Aufnahmevermögen für lösliche Inhaltsstoffe wie Verunreinigungen des zur Reinigung eingesetzten Polyarylensulfids besitzt. Aceton erweist sich auch als günstig für ein Waschen des ausgefällten Polyarylensulfids. Lösliche Inhaltsstoffe oder Verunreinigungen sind beispielsweise nicht umgesetzte Reaktanden bei der Herstellung von PAS, bei der Herstellung gebildete lösliche Oligomere, lösliche Additive, Amin-Verbindungen, Sulfid-Verbindungen.

Die Auflösung der polyarylensulfidhaltigen Materialien oder von Polyarylensulfid kann entweder in einem Lösemittel a) unter Erhitzen oder b) unter Erhitzen und Druck erfolgen.

Wird bei dem Verfahren gemäß der Erfindung mit Füllstoffen versehenes Polyarylensulfid-Material eingesetzt, werden diese nichtlöslichen Bestandteile nach dem Löseprozeß abgetrennt. Dies kann durch Filtration, Sedimentation, Zentrifugation oder andere dem Fachmann bekannte Verfahren erfolgen. Die Abtrennung ungelöster Bestandteile erfolgt vorteilhaft durch Filtration bei der Lösetemperatur. Als Filtereinrichtung können beispielsweise Einschienenfilter eingesetzt werden. Wenn sich in dem Polyarylensulfid-Material noch andere Stoffe befinden, die bei dem Lösevorgang nicht gelöst werden, können diese ebenfalls durch Filtration entfernt werden.

Unlöslische Inhaltsstoffe sind beispielsweise Metalle, unlösliche Polymere wie PTFE, Oxidationsprodukte des PAS, Alterungsprodukte, Nichtmetalle wie keramische Materialien.

Im Anschluß an den Lösevorgang und gegebenenfalls nach einer Abtrennung ungelöster Bestandteile wird das in der Lösung befindliche Polyarylensulfid durch Aus- bzw. Umfällung in einem flüssigen Medium erhalten. Das flüssige Medium wird im Verhältnis von 1:1 bis 1:100, vorzugsweise 1:5 bis 1:10 als Überschuß, bezogen auf Polyarylensulfid, vorgelegt. Die Umfällung kann sowohl bei Temperaturen unterhalb Raumtemperatur, d.h. kleiner als 20 bis 30°C, oder auch bis zur maximalen Lösetemperatur erfolgen, indem die Polymerlösung in das flüssige Medium z.B. unter starkem Rühren eingebracht wird. Im Anschluß an die Ausfällung erfolgt ein ein- oder mehrstufiger Waschprozess mit frischem flüssigen Medium und anschließendem Trocknen.

Durch Variationen der Ausfällbedingungen läßt sich die Gestalt und Morphologie der erhaltenen Teilchen beeinflussen. Beispielsweise werden durch Eintropfen der Polymerlösung unter starkem Rühren flockige Gebilde erhalten. Wird dagegen die Lösung in ein stehendes d.h. nicht bewegtes Medium eingetropft, resultiert eine kugelförmige Gestalt bei Polyarylensulfid-Teilchen.

Lösemittel für PAS, die im Verfahren gemäß der Erfindung eingesetzt werden, sind im allgemeinen hochsiedend und weisen Siedepunkte bis 400°C auf. Geeignete Lösemittel für PAS sind ein- oder mehrkernige organische Verbindungen mit 6 bis 25 C-Atomen, die unsubstituiert oder mit Halogen, vorzugsweise Chlor oder Brom, Alkoxygruppen mit 1 bis 4 C-Atomen im Alkylrest oder Arylgruppen substituiert sind. Diese Verbindungen können auch phenolische OH-Gruppen tragen. Geeignete Lösungsmittel sind beispielsweise Triphenylmethan, Tetraphenylmethan, die verschiedenen Mono-, Di- und Trichlorbenzole, N-Methylpyrrolidon, 1,2,3-Triphenylbenzol, 2- und 4-Phenylphenol, 2,6-Diphenylphenol, 2,4,6-Trichlorphenol, 1- oder 2-Chlornaphthalin, 1-Bromnaphthalin, 1- und 2-Methoxynaphthalin, 1-Ethoxynaphthalin, 2,6- und 2,7-Dimethoxynaphthalin, 1-Phenylnaphthalin, Benzophenon, Azetophenon, 4,4'-Dimethoxybenzophenon, 4,4'-Diphenylbenzophenon, ferner Caprolactam, N-Methylcaprolactam, N-Ethylcaprolactam, Chinolin, Isochinolin und 1-Cyclohexyl-2-pyrrolidon oder Gemische aufgeführter Lösemittel. Besonders bevorzugt sind die Lösemittel Chlornaphthalin, Methoxynaphthalin, Benzophenon oder Chinolin bei einer Auflösung unter Erhitzen (Lösevariante a)) und die Lösemittel Anisol oder Chlorbenzol bei einer Auflösung unter Erhitzen und unter Druck (Löse-Variante b))

Günstig sind Lösemitel, in denen Verunreinigungen des eingesetzten PAS gelöst bleiben. Durch diesen Effekt kann bei einer Abkühlung und Ausfällung des PAS eine Reinigung erzielt werden. Auch beim spontanen Verdampfen des Lösemittels kann eine Reinigung erzielt werden, z.B. durch Entfernung verdampfbarer Verunreinigungen.

Das Polyarylensulfid-haltige Material wird bei Temperaturen von 150°C bis 360°C, vorzugsweise 180°C bis 260°C mit den Lösungsmitteln behandelt, wobei die Lösung stattfindet. Die erhaltene Lösung ist niedrigviskos. Im allgemeinen wird bei Normaldruck gearbeitet. Das Lösen des Polyarylensulfid-Materials kann jedoch auch unter erhöhtem Druck stattfinden. Bei letzterer Verfahrensweise kann auf die Ausfällung in flüssigem Medium verzichtet werden, wenn die Lösung über eine Düse, beispielsweise in einen beheizten Sprühturm entspannt wird, wobei ein feinkörniges Polyarylensulfid-Pulver anfällt. Enthält die Lösung feste Bestandteile, können diese durch eine Druckfiltration vor der Sprühtrocknung entfernt werden. Wird unter Druck gearbeitet und die Lösung in einen beheizten Sprühturm eingegeben, kann das Lösungsmittel über Kopf entnommen und kondensiert werden. Die Wärmekapazität der Lösung ist ausreichend, um beispielsweise Chlorbenzol vollständig zu verdampfen, so daß eine zusätzliche Trocknung nur noch bedingt erforderlich ist.

Wird die unter erhöhten Druck stehende Polymerlösung in ein flüssiges Medium hinein spontan entspannt, werden beispielsweise faserförmige Aggregate erhalten. Außerdem bewirkt diese Methode einen zusätzlichen Reinigungseffekt gegenüber der Sprühtrocknung.

Das bei dem Verfahren gemäß der Erfindung gewonnene Polyarylensulfid-Produkt entspricht chemisch dem als Ausgangsmaterial eingesetzten Polyarylensulfid-Material. Es können aber darüberhinaus spezielle gewünschte Eigenschaften gezielt verändert bzw. verbessert werden. So kann in Abhängigkeit von der Art der Umfällung, der Umfällungstemperatur, dem Umfällungsmittel, dem Lösungsmittel und der Polymer-Konzentration in der Lösung Einfluß z.B. auf die Morphologie, auf den kristallinen Anteil, die Molekulargewichtsverteilung, das mittlere Molekulargewicht und wie bereits erwähnt, auf die Gestalt des Produktes genommen werden. Es wird an dieser Stelle Bezug genommen auf die am 26. Oktober 1994 eingereichte deutsche Patentanmeldung P 44 38 447.2, Titel: "Polyarylensulfid-Teile mit großer spezifischer Oberfläche und Verfahren zu deren Herstellung", in der diese Änderungen der Eigenschaften ausführlich angeführt sind. Im allgemeinen wird die spezifische Oberfläche der erhaltenen Teilchen sowie der amorphe Anteil in dem erhaltenen Polyarylensulfid-Material erhöht.

PAS-Teilchen mit einer großen spezifischen Oberfläche können durch das erfindungsgemäße Verfahren hergestellt werden. Eine große spezifische Oberfläche von PAS-Teilchen ist besonders Vorteilhaft bei der Verwendung als Filtermaterial oder als Adsorbens, beispielsweise bei der Ozon- und NO₂-Entfernung. Die Verwendung von PAS als Ozon-Filtermaterial wird in der deutschen Anmeldung mit dem Aktenzeichen P 4314734.8 vom 4. Mai 1993 mit dem Titel "Filtermaterial und Verfahren zur Entfernung von Ozon aus Gasen und Flüssigkeiten" beschrieben, auf die hiermit Bezug genommen wird.

Eine besonders große spezifische Oberfläche von Polyarylensulfid-Teilchen ist durch Auflösen des Polymers bei Normal- oder Überdruck bei Temperaturen im Bereich von 180 bis 360° C in einem Lösemittel, Abkühlen der Polymerlösung auf Raumtemperatur und Behandlung der abgekühlten Lösung mit einer Flüssigkeit von Raumtemperatur, in der sich das Polymer nicht löst (z. B. Aceton). Nach Waschen mit der Flüssigkeit und thermisch schonendem Trocknen erhält man Polyarylensulfid-Teilchen mit einer spezifischen Oberfläche von mindestens 80 m²/g. Polyarylensulfidteilchen mit einer spezifischen Oberfläche von z.B. um 180 m²/g lassen sich gezielt herstellen.

Als Charakterisierungsmethoden werden Differential Scanning Calorimetrie (DSC), die rheologischen Untersuchungen Time Sweep (Time Swp.) und
Frequenz Sweep (Freq. Swp.), Thermografimetrie (TG),
Auslagerungstemperatur, BET-Oberfläche GC/MS-Analyse und
Röntgendiffraktometrie (XRD) eingesetzt.

Als Polyarylensulfid-enthaltendes Material, das bei dem Verfahren gemäß der Erfindung eingesetzt wird, eignet sich z.B. sogenanntes Recyclat, d.h. Abfälle aus der Verarbeitung von Polyarylensulfid, ferner Polyarylensulfid-Material, das zur Wiedergewinnung gesammelt wurde, beispielsweise gebrauchte Teile aus nicht mehr funktionsfähigen Geräten und sonstigen verarbeiteten Polyarylensulfid-Formteilen. Diese kann unverschnittes Polymer oder mit Füll- und/oder Verstärkungsmitteln verschnittenes Polymer darstellen.

Polyarylensulfide, die der Wiedergewinnung zugeführt werden, sind lineare oder verzweigte Polyarylenverbindungen mit der wiederkehrenden Einheit der Formel (1), die mindestens eine Arylenthioethergruppe enthalten,

-[(Ar¹)ₙ-X]ₘ-[(Ar²)ᵢ-Y]ⱼ-[(Ar³)ₖ-Z]ₗ-[(Ar⁴)ₒ-W]ₚ- [I]

wobei Ar¹, Ar², Ar³, Ar⁴, W, X, Y und Z unabhängig voneinander gleich oder verschieden sind. Die Indizes n, m, i, j, k, l, o und p sind ganze Zahlen Null, 1, 2, 3 oder 4, wobei ihre Summe mindestens 2 ergeben muß. Ar¹, Ar², Ar³ und Ar⁴ stehen in der Formel (I) für einfache oder direkt über para-, meta- oder orthoverknüpfte Arylensysteme mit 6 bis 18 C-Atomen. W, X, Y und Z stellen Verknüpfungsgruppen dar, ausgewählt aus -SO₂-, -S-, -SO-, -O-, -CO-, -CO₂-, Alkylen- oder Alkylidengruppen mit 1 bis 6 C-Atomen und -NR¹-Gruppen, wobei R¹ für Alkyl- oder Alkyliden-Gruppen mit 1 bis 6 C-Atomen steht. Die Arylsysteme der Formel (I) können entsprechend ihrer chemischen Struktur noch zusätzlich unabhängig voneinander ein oder mehrere gängige funktionelle Gruppen, z.B. Alkylreste, Halogene, Sulfonsäure-, Amino-, Nitro-, Cyano-, Hydroxy- oder Carboxygruppen enthalten. Ferner sind auch Blockcopolymere aus Einheiten der Formel (I) einsetzbar.

Bevorzugt als Polyarylensulfid ist Polyphenylensulfid (PPS) mit der wiederkehrenden Einheit -C₆H₄-S-, die in "Ullmann's Encyclopedia of Industrial Chemistry", Volume A21, B. Elvers, S. Hawkins und G. Schulz (Eds.), VCH, Weinheim-New York 1992, S. 463, beschrieben sind und worauf Bezug genommen wird. Die Synthese von sulfongruppenhaltigen Polyarylensulfiden ist beschrieben in Chimia 28(9), (1974) 567.

Polyphenylensulfid enthält im allgemeinen 1,4-verknüpfte aromatische Einheiten. Bis zu einem Anteil von 50 Mol-% können darin auch 1,2- und/oder 1,3-Verknüpfungen der aromatischen Einheiten enthalten sein.

Im allgemeinen sind Polyarylensulfide geeignet, die ein mittleres Molekulargewicht Mw von 4 000 bis 200 000, vorzugsweise von 10 000 bis 150 000, insbesondere 25 000 bis 100 000, bestimmt durch Gelpermeationschromatographie, aufweisen.

Polyarylensulfid-Oxidationsprodukte sind Polyarylensulfide, deren Schwefelbrücken (-S-) teilweise oder vollständig in Sulfoxid- (-SO-) oder Sulfon-Gruppen (-SO₂-) überführt sind und in organischen Lösemitteln für Polyarylensulfide nicht mehr löslich sind. Polyarylensulfid-Alterungsprodukte sind beispielsweise vernetzte Polymere, die in organischen Lösemitteln für Polyarylensulfide nicht mehr löslich sind. Polyarylensulfid-Abbauprodukte sind kürzerkettige Polyarylensulfide, die chemisch veränderte oder gespaltene Arylen-Einheiten oder Teile davon enthalten können, und ein anderes Löslichkeitsverhalten als die Polyarylensulfide aufweisen. Die Polyarylensulfid-Abbauprodukte können in den organischen Lösemitteln besser oder schlechter gelöst werden als die unveränderten Polyarylensulfide, wodurch eine Abtrennung möglich wird.

Das wiedergewonnene Polyarylensulfid kann erneut als technischer Kunststoff eingesetzt werden, ohne daß Qualitätseinbußen bezüglich der Eigenschaften gegenüber dem aus der Synthese gewonnenen Material eintreten. Aufgrund der Erhöhung der spezifischen Oberfläche eignet sich das wiedergewonnene Polyarylensulfid beispielsweise als Material für Schadstoffilter oder Adsorbentien.

Das Verfahren zur Wiedergewinnung von PAS ist ohne Qualitätsverlust mehrmalig durchführbar.

### Beispiele

1) 30 g Polyphenylensulfid-Pulver, abgekürzt PPS, mit einer mittleren Korngröße von 1 mm, hergestellt nach US-A-3,354,129, wird in 300 ml 1-Chlornaphthalin eingebracht und in einer Apparatur mit Rührer, Thermometer, und Kühler auf 235°C erhitzt, wobei sich das PPS-Material vollständig löst. Die Lösung wird für weitere 45 Minuten bei der Lösetemperatur erhitzt.
1a): Die heiße Polymerlösung wird unter starkem Rühren in 3 1 gekühltes (ca. 0° C) Aceton getropft (heiße Umfällung).
1b): Die Polymerlösung läßt man auf Raumtemperatur (ca. 25°C) abkühlen. Es bildet sich eine gelartige Polymerlösung. Die Polymerlösung wird in 3 1 Aceton von Raumtemperatur aufgenommen, dabei wird stark gerührt. Das Polymer fällt aus (kalte Umfällung).
   Das umgefällte Produkt aus 1a) oder 1b) wird über eine Nutsche mit Seidenfilter abgesaugt und anschließend mit Aceton und Wasser intensiv gewaschen. Eine nochmalige Aufschwämmung in Aceton und wiederholtes Absaugen und Waschen beendet den Reinigungsvorgang. Die Trocknung erfolgt bei 70°C unter vermindertem Druck bis zur Gewichtskonstanz.
   Ausbeuten und Eigenschaften der Produkte im Vergleich zu dem unbehandelten, eingesetzten PPS-Material werden in Tabelle 1 aufgeführt.

2) Analog zu Beispiel 1 wurde mit 1-Methoxynaphthalin als Lösemittel gearbeitet. Ausbeuten und Eigenschaften der Produkte werden in Tabelle 1 aufgeführt.

**Tabelle 1**

| | Ausgangsmaterial | Produkt von Beispiel 1 | | Produkt von Beispiel 2 | |
|---|---|---|---|---|---|
| | | 1a | 1b | 2a | 2b |
| Ausbeute [%] | - | 97,1 | 96,0 | 97,2 | 96,8 |
| Schmelztemperatur [°C] | 273 | 275 | 274 | 280 | 279 |
| Kristallisationswärme [J/g] | -37,9 | -34,8 | -36,7 | -38,7 | -41,8 |
| Spezifische Oberfläche [m²/g] | 30,3 | 134,1 | 84,5 | 178,2 | 59,2 |

Aus der Tabelle 1 geht hervor, daß die Schmelztemperaturen der Produkte gegenüber dem Ausgangsmaterial erhöht sind, was auf eine Erhöhung des Reinheitsgrades zurückzuführen ist. Auffallend ist die Änderung der spezifischen Oberfläche der wiedergewonnenen Produkte. Das Verhältnis von amorphem zu kristallinem Anteil in den Produkten wurde mit einem Röntgendiffraktometer qualitativ bestimmt. Die Auswertung zeigte eine Erhöhung des amorphen Anteils zum Vergleich zum eingesetzten Ausgangsmaterial, besonders wenn die Umfällung bei maximaler Lösetemperatur vorgenommen wird. Bei Raumtemperatur ist das Verhältnis von amorphem zu kristallinem Anteil vergleichbar mit dem des Ausgangsmaterials. Viskositätsuntersuchungen des ungefällten Materials zeigten keine zusätzliche Vernetzung durch die Temperaturbehandlung beim Lösen des PPS. Das mittlere Molekulargewicht ist konstant geblieben, bzw. es hat eine geringe Abnahme stattgefunden. Die Reduzierung des mittleren Molekulargewichts beruht vermutlich auf einer Abtrennung oligomerer Anteile im eingesetzten PPS während des Prozesses.
3) 2 g eines Recyclats eines faserverstärkten PPS mit einem Glasfaseranteil von 40 Gew.-% wurde mit 50 ml 1-Chlornaphthalin in eine Apparatur, wie in Beispiel 1 (1b) beschrieben, eingebracht und auf 240°C erwärmt. Die Abtrennung erfolgte durch ein ölbeheiztes Filterelement mit einem Einschichtfilter. Die Umfällung erfolgte in Aceton bei 25°C. Die Aufarbeitung und Charakterisierung des Produktes erfolgte wie in Beispiel 1 beschrieben. Es wurden Werte erhalten, die mit denen der in Tabelle 1 beschriebenen Werte übereinstimmten.
4 a) Das aus Beispiel 1a) bei Raumtemperatur umgefällte PPS-Material wurde gemäß Beispiel la) erneut behandelt. Die Eigenschaften des Produktes unterschieden sich nicht von den Produkten aus Beispiel 1 (Einmal-Behandlung).
4 b) Eine wiederholte Umfällung des Produktes aus Beispiel 4 zeigte unveränderte Eigenschaften.
5) Recyclat aus Füllstoff-freiem PPS wurde mit Chlorbenzol in einem Autoklaven behandelt. Der sich bei den in Tabelle 2 angegebenen Temperaturen aufbauende Dampfdruck des Chlorbenzols lag im Bereich von 9x10⁵ bis 1,4x10⁶ Pa. Bei einer Verweilzeit bei den angegebenen Lösetemperaturen von 20 Minuten wurden die in der Tabelle 2 angegebenen Konzentrationen erzielt. Die anschließende spontane Entspannung der genannten höchsten Konzentration über eine Düse in einen beheizten Sprühturm ergab ein feinkörniges PPS-Pulver. Das Lösungsmittel wurde über Kopf entnommen und kondensiert. Die Untersuchungsergebnisse von DSC, Time Swp. und Frequenz Swp. zeigten bezüglich der Lösetemperaturen im Vergleich zum Ausgangsmaterial keine Unterschiede auf.

**Tabelle 2**

| Temperatur [°C] | PPS-Konzentration [Gew.-%] |
|---|---|
| 235 | 10 |
| 239 | 20 |
| 242 | 30 |
| 245 | 40 |
| 250 | 50 |
| 260 | 60 |

6) Eigenschaften von PPS (Mw 90000)
Von verschiedenen PPS-Proben mit unterschiedlich großer spezifischer Oberfläche wurde das Porenvolumen und die Filtereigenschaft gegenüber Ozon bestimmt.

Die Bestimmung der spezifischen Oberfläche erfolgte nach BET durch Stickstoffadsorption mit einem Meßgerät der Firma Fisons Inst.

Begasungsparameter für Ozon-Kapazitätsuntersuchungen von PPS:

| | |
|---|---|
| Ozonkonzentration | 10 g/m³ |
| Sauerstoffstrom | 100 l/h |
| Verweilzeit | 0,5 - 1 Sekunde |
| Massenstrom O₃ | 1 g/h |
| Einwaage von PPS | 6,2 g |

PPS-Probe 6.1 (Tabelle 3) besteht aus PPS-Pulver (Probe 7.2), das 2 Stunden bei 250°C gelagert wurde.

PPS-Probe 6.2 (Tabelle 3) ist unbehandeltes PPS-Pulver (Mw 90000) mit einer Korngröße 0,2 bis 1 mm.

PPS-Probe 6.3 (Tabelle 3) besteht aus PPS, das in 1-Chlornaphthalin heiß umgefällt wurde.

PPS-Probe 6.4 (Tabelle 3) besteht aus PPS, das in Methoxynaphthalin kalt umgefällt wurde.

**Tabelle 3**

| Probe | Sepz. Oberfläche / m²/g | Porenvolumen / cm³/g | Beladungskapazität / % |
|---|---|---|---|
| 6.1 | 2,72 | 0,058 | keine Filterwirkung |
| 6.2 | 30,3 | 0,301 | 16,3 |
| 6.3 | 84,5 | 0,764 | 21,5 |
| 6.4 | 178,2 | 1,045 | nicht bestimmt |

## Patentansprüche

1. Verfahren zur Gewinnung von Polyarylensulfid aus Polyarylensulfid-haltigem Material, bei dem das Polyarylensulfid-haltige Material mit einem Lösemittel bei 150 bis 360 °C behandelt, das Polyarylensulfid dabei in Lösung gebracht und anschließend durch Mischen der Polyarylensulfid-Lösung mit einem flüssigen Medium ausgefällt wird, wobei das flüssige Medium ein Lösemittel mit einer Aldehyd- oder Ketogruppe, ein aromatisches Lösemittel oder eine Lösemittelmischung, die ein Lösemittel mit einer Aldehyd- oder Ketogruppe oder ein aromatisches Lösemittel enthält, ist.

2. Verfahren zur Gewinnung von Polyarylensulfid aus Polyarylensulfid-haltigem Recyclat-Material, bei dem das Polyarylensulfid-haltige Recyclat-Material
- bei 150 bis 360 °C mit einem Lösemittel behandelt wird, wobei das Polyarylensulfid in Lösung gebracht wird,
- die Lösung von nichtlöslichen Feststoff-Bestandteilen des Polyarylensulfid-haltigen Recyclat-Materials befreit wird
- und anschließend das Polyarylensulfid durch Abkühlen, spontanes Verdampfen des Lösemittels oder durch Mischen mit einem flüssigen Medium ausgefällt wird.

3. Verfahren nach Anspruch 2, dadurch gekennzeichnet, daß Polyarylensulfid-Oxidationsprodukte, Polyarylensulfid-Alterungsprodukte, Abbauprodukte, Füllstoffe oder andere nicht lösliche Stoffe abgetrennt werden.

4. Verfahren nach einem oder mehreren der Ansprüche 1 bis 3, dadurch gekennzeichnet, daß das Lösemittel eine ein- oder mehrkernige organische Verbindung mit 6 bis 25 C-Atomen ist, die unsubstituiert oder substituiert ist.

5. Verfahren nach Anspruch 4, dadurch gekennzeichnet, daß die Verbindung mit Halogen, vorzugsweise Chlor oder Brom, Alkoxygruppen mit 1 bis 4 C-Atomen im Alkylrest oder Arylgruppen substituiert ist.

6. Verfahren nach einem oder mehreren der Ansprüche 1 bis 5, dadurch gekennzeichnet, daß das Polyarylensulfid-haltige Material bei 180 bis 260 °C gelöst wird.

7. Verfahren nach einem oder mehreren der Ansprüche 1 bis 6, dadurch gekennzeichnet, daß das Polyarylensulfid-haltige Material unter erhöhtem Druck gelöst wird.

8. Verfahren nach einem oder mehreren der Ansprüche 1 bis 7, dadurch gekennzeichnet, daß das Polyarylensulfid durch Mischen der Polyarylensulfid-Lösung mit Aceton, Toluol oder acetonhaltigen Lösemittelgemischen ausgefällt wird.

9. Verfahren nach einem oder mehreren der Ansprüche 1 bis 8, dadurch gekennzeichnet, daß das Verhältnis von flüssigem Medium zu Polyarylensulfid 1:1 bis 1:100, bezogen auf Polyarylensulfid, beträgt.

10. Verfahren nach Anspruch 9, dadurch gekennzeichnet, daß das Verhältnis von flüssigem Medium zu Polyarylensulfid 1:5 bis 1:10, bezogen auf Polyarylensulfid, beträgt.

11. Verfahren nach einem oder mehreren der Ansprüche 1 bis 10, dadurch gekennzeichnet, daß Polyphenylensulfid als Polyarylensulfid eingesetzt wird.

12. Verfahren nach einem oder mehreren der Ansprüche 1 bis 11, dadurch gekennzeichnet, daß beim Fällen des Polyarylensulfids die Polyarylensulfid-Lösung Raumtemperatur bis maximale Lösetemperatur aufweist.

13. Verfahren nach Anspruch 12, dadurch gekennzeichnet, daß die Polyarylensulfid-Lösung unter starkem Rühren in das flüssige Medium eingebracht wird und im Anschluß an die Ausfällung ein ein- oder mehrstufiger Waschprozeß mit frischem flüssigen Medium und ein anschließendes Trocknen erfolgt.

14. Verwendung von Polyarylensulfidteilchen mit einer spezifischen Oberfläche von mindestens 80 m²/g als Adsorbens oder Filtermaterial.

## Claims

1. A process for recovering polyarylene sulfide from material comprising polyarylene sulfide, wherein the material comprising polyarylene sulfide is treated with a solvent at from 150 to 360°C, the polyarylene sulfide dissolving and being subsequently precipitated by mixing the polyarylene sulfide solution with a liquid medium, where the liquid medium is a solvent with an aldehyde group or keto group, an aromatic solvent, or a solvent mixture comprising a solvent with an aldehyde group or keto group or an aromatic solvent.

2. A process for recovering polyarylene sulfide from recyclate material comprising polyarylene sulfide, wherein the recyclate material comprising polyarylene sulfide
- is treated with a solvent at from 150 to 360°C, the polyarylene sulfide dissolving,
- the solution is freed from insoluble solid constituents of the recycled material comprising polyarylene sulfide,
- and, subsequently, the polyarylene sulfide is precipitated by cooling, by spontaneous evaporation of the solvent, or by mixing with a liquid medium.

3. The process as claimed in claim 2, wherein polyarylene sulfide oxidation products, polyarylene sulfide aging products, degradation products, fillers or other insolubles are separated off.

4. The process as claimed in one or more of claims 1 to 3, wherein the solvent is a mono- or polycyclic organic compound having 6 to 25 carbon atoms which is unsubstituted or substituted.

5. The process as claimed in claim 4, wherein the compound is substituted by halogen, preferably chlorine or bromine, by alkoxy groups having 1 to 4 carbon atoms in the alkyl radical, or by aryl groups.

6. The process as claimed in one or more of claims 1 to 5, wherein the material comprising polyarylene sulfide is dissolved at from 180 to 260°C.

7. The process as claimed in one or more of claims 1 to 6, wherein the material comprising polyarylene sulfide is dissolved under elevated pressure.

8. The process as claimed in one or more of claims 1 to 7, wherein the polyarylene sulfide is precipitated by mixing the polyarylene sulfide solution with acetone, toluene or solvent mixtures comprising acetone.

9. The process as claimed in one or more of claims 1 to 8, wherein the ratio of liquid medium to polyarylene sulfide is from 1:1 to 1:100, based on polyarylene sulfide.

10. The process as claimed in claim 9, wherein the ratio of liquid medium to polyarylene sulfide is from 1:5 to 1:10, based on polyarylene sulfide.

11. The process as claimed in one or more of claims 1 to 10, wherein the polyarylene sulfide employed comprises polyphenylene sulfide.

12. The process as claimed in one or more of claims 1 to 11, wherein on precipitation of the polyarylene sulfide its solution is at a temperature from room temperature to maximum dissolving temperature.

13. The process as claimed in claim 12, wherein the polyarylene sulfide solution is introduced with vigorous stirring into the liquid medium and precipitation is followed by a single-stage or multistage washing operation with fresh liquid medium and subsequent drying.

14. The use of polyarylene sulfide particles having a specific surface area of at least 80 m²/g as an adsorbent or filter material.

## Revendications

1. Procédé d'obtention de poly(sulfure d'arylène) à partie d'un matériau contenant du poly(sulfure d'arylène), dans lequel le matériau contenant du poly(sulfure d'arylène) est traité avec un solvant à 150 jusqu'à 360°C, le poly(sulfure d'arylène) est en l'occurrence mis en solution et est ensuite précipité par mélange de la solution de poly(suLfure d'arylène) avec un milieu liquide, le milieu liquide étant un solvant avec un groupement aldéhyde ou céto, un solvant aromatique ou un mélange de solvants qui contient un solvant avec un groupement aldéhyde ou céto ou un solvant aromatique.

2. Procédé d'obtention de poly(sulfure d'arylène) à partir d'un matériau de recyclage contenant du poly(sulfure d'arylène), dans lequel le matériau de recyclage contenant du poly(sulfure d'arylène)
- est traité à 150 jusqu'à 360°C avec un solvant, le poly(sulfure d'arylène) étant mis en solution;
- la solution est débarrassée de constituants solides non solubles du matériau de recyclage contenant du poly(sulfure d'arylène), et
- le poly(sulfure d'arylène) est ensuite précipité par refroidissement, volatilisation spontanée du solvant ou par mélange avec un milieu liquide.

3. Procédé suivant la revendication 2, caractérisé en ce que l'on sépare des produits d'oxydation du poly(sulfure d'arylène), des produits de vieillissement du poly(sulfure d'arylène), des produits de décomposition, des charges ou d'autres matières non solubles.

4. Procédé suivant l'une ou plusieurs des revendications 1 à 3, caractérisé en ce que le solvant est un composé organique mononucléaire ou polynucléaire avec 6 à 25 atomes de carbone, qui est substitué ou non substitué.

5. Procédé suivant la revendication 4, caractérisé en ce que le composé est substitué avec un halogène, de préférence ou chlore ou du brome, avec des groupements alcoxy ayant de 1 à 4 atomes de carbone dans le radical alkyle ou avec des groupements aryle.

6. Procédé suivant l'une ou plusieurs des revendications 1 à 5, caractérisé en ce que le matériau contenant du poly(sulfure d'arylène) est dissous à 180 jusqu'à 260°C.

7. Procédé suivant l'une ou plusieurs des revendications 1 à 6, caractérisé en ce que le matériau contenant du poly(sulfure d'arylène) est dissous à pression supérieure.

8. Procédé suivant l'une ou plusieurs des revendications 1 à 7, caractérisé en ce que le poly(sulfure d'arylène) est précipité par mélange de la solution de poly(sulfure d'arylène) avec de l'acétone, du toluène ou des mélanges de solvants contenant de l'acétone.

9. Procédé suivant l'une ou plusieurs des revendications 1 à 8, caractérisé en ce que le rapport du milieu liquide au poly(sulfure d'arylène) vaut 1:1 à 1:100, par rapport au poly(sulfure d'arylène).

10. Procédé suivant la revendication 9, caractérisé en ce que le rapport du milieu liquide au poly(sulfure d'arylène) vaut 1:5 à 1:10, par rapport au poly(sulfure d'arylène).

11. Procédé suivant l'une ou plusieurs des revendications 1 à 10, caractérisé en ce que le poly(sulfure de phénylène) est utilisé comme poly(sulfure d'arylène).

12. Procédé suivant l'une ou plusieurs des revendications 1 à 11, caractérisé en ce qu'en cas de précipitation du poly(sulfure d'arylène), la solution de poly(sulfure d'arylène) présente une température ambiante jusqu'à une température maximale de dissolution.

13. Procédé suivant la revendication 12, caractérisé en ce que la solution de poly(sulfure d'arylène) est incorporée dans le milieu liquide sous agitation vigoureuse et en ce que, suite à la précipitation, il se produit un processus de lavage à une ou plusieurs étapes avec un milieu liquide frais et un séchage ultérieur.

14. Utilisation de particules de poly(sulfure d'arylène) ayant une surface spécifique d'au moins 80 m²/g comme adsorbant ou matériau filtrant.
